# EUROPÄISCHE PATENTSCHRIFT

(11) **EP 1 798 454 B1**
(45) Veröffentlichungstag und Bekanntmachung des Hinweises auf die Patenterteilung: **20.10.2010**
(21) Anmeldenummer: 06023279.0
(22) Anmeldetag: 09.11.2006
(51) Int. Cl.: F16J 15/32

(54) **Dichtring und Dichtungsanordnung sowie deren Verwendung**
Seal ring and sealing arrangement using the same
Anneau d'étanchéité ainsi que dispositif d'étanchéité utilisant cet anneau

(30) Priorität: 13.12.2005 DE 102005059926
(43) Veröffentlichungstag der Anmeldung: 20.06.2007
(73) Patentinhaber: Carl Freudenberg KG, 69469 Weinheim (DE)
(72) Erfinder: Kinsch, Patrick, 34590 Wabern (DE); Hainmüller, Werner, 34628 Willingshausen (DE)

(56) Entgegenhaltungen:
- EP-A1- 0 011 218
- EP-A1- 0 584 619
- DE-A1- 2 507 222
- DE-A1- 3 016 231
- DE-U1- 20 315 344
- US-A1- 2002 153 665

## Beschreibung

### Technisches Gebiet

Die Erfindung betrifft einen Dichtring, umfassend einen Gleitring und einen Anpressring zur Anpressung des Gleitrings an die Oberfläche eines abzudichtenden Maschinenelements, wobei der Gleitring stirnseitig zumindest einerseits zumindest einen sich in axialer Richtung erstreckenden Nocken aufweist, der an einer axial benachbarten Begrenzungswand der Einbaunut ablegbar ist.

### Stand der Technik

Solche Dichtringe sind allgemein bekannt und gelangen beispielsweise zur Abdichtung von relativ zueinander translatorisch hin- und her bewegbaren Maschinenelementen zur Anwendung. Die Dichtringe können als Kolben- oder Stangendichtungen ausgebildet sein. Der Gleitring kann beispielsweise aus einem polymeren Werkstoff bestehen, und der Anpressring kann beispielsweise durch einen O-Ring gebildet sein, der aus einem gummielastischen Werkstoff besteht.

Ein Dichtring der eingangs genannten Art ist aus der DE 203 15 344 U1 bekannt. Die Nocken sind derart dimensioniert und angeordnet, dass sie den Gleitring in geringem axialem Abstand von den Begrenzungswandungen der Einbaunut halten. Der Gleitring ist bei dem vorbekannten Dichtring in sich geschlossen ausgebildet, so dass eine Montage und Demontage des Gleitrings wenig zufriedenstellend ist.

Aus der DE 25 07 222 A1 ist ein weiterer Dichtring bekannt, umfassend einen Gleitring und einen Anpressring, wobei der Gleitring eine Durchtrennung aufweist, die beispielsweise Z-förmig ausgebildet ist.

Aus der EP-A 1-0 011 218 ist die Verwendung eines Dichtrings in Schlagbohrmaschinen bekannt.

Ein weiterer Dichtring ist aus der DE 30 16 231 A1 bekannt. Der Dichtring weist sich in axialer Richtung erstreckende Nocken auf, durch die eine axiale Verspannung des Dichtrings innerhalb seines Einbauraums bedingt ist.

### Darstellung der Erfindung

Der Erfindung liegt die Aufgabe zu Grunde, einen Dichtring der eingangs genannten Art derart weiter zu entwickeln, dass die Montage oder Demontage in jedem Fall vereinfacht ist und dass der Dichtring, insbesondere der Gleitring, gute Gebrauchseigenschaften während einer langen Gebrauchsdauer aufweist. Der Gleitring soll außerdem eine gute Abdichtung der gegeneinander abzudichtenden Räume gewährleisten.

Diese Aufgabe wird erfindungsgemäß durch einen Dichtring mit den Merkmalen von Anspruch 1 gelöst.
Auf eine vorteilhafte Ausgestaltung nehmen die auf Anspruch 1 rückbezogenen Ansprüche Bezug.

Zur Lösung der Aufgabe ist ein Dichtring vorgesehen, der dadurch gekennzeichnet ist, dass der Gleitring an einer Stelle seines Umfangs eine sich axial von einer zur anderen Stirnseite erstreckende Durchtrennung aufweist und dass der Nocken im Bereich der Umfangserstreckung der Durchtrennung angeordnet ist.

Die Durchtrennung im Gleitring bedingt eine einfache Montage des Gleitrings auch dann, wenn die Einbaunut nur schwer zugänglich ist und/oder wenn zur Montage/Demontage eines in sich geschlossenen Gleitrings ein hoher Aufwand nötig wäre, weil beispielsweise eine Maschine, in der der Dichtring zur Anwendung gelangt, weitgehend zerlegt werden müsste.

Generell besteht bei einem Gleitring mit Durchtrennung die Gefahr, dass die Dichtwirkung eingeschränkt ist und dass die gegeneinander abzudichtenden Räume durch die Durchtrennung miteinander verbunden sind und Leckage dadurch unerwünscht von einem abzudichtenden Raum in den anderen gelangt. Dieser Nachteil ist hauptsächlich darauf zurück zu führen, dass sich die die Durchtrennung begrenzenden Enden des Gleitrings während der bestimmungsgemäßen Verwendung des Dichtrings relativ zueinander bewegen und dadurch unerwünscht erhöhte Leckage und/oder eine Förderwirkung des abzudichtenden Mediums bedingt ist. Die Leckage ist umso größer, je größer der durch die Durchtrennung gebildete Spalt ist.

Die Relativbewegung der die Durchtrennung begrenzenden Enden des Gleitrings wird durch die sich in axialer Richtung erstreckenden Nocken auf ein Minimum begrenzt, da die Nocken während der bestimmungsgemäßen Verwendung des Dichtrings an der jeweils axial benachbarten Begrenzungswand der Einbaunut anliegen.

Trotz der einfachen Montage des durch die Durchtrennung geschlitzten Gleitrings weist dieser durch die Funktion und Anordnung der Nocken ausgezeichnete Gebrauchseigenschaften während einer langen Gebrauchsdauer auf, die sich von einem in sich geschlossenen Gleitring auch im Hinblick auf Abdichtleistung praktisch nicht unterscheiden.

Bevorzugt weist der Gleitring stirnseitig beiderseits im Bereich der Umfangserstreckung der Durchtrennung jeweils zumindest einen sich in axialer Richtung erstreckenden Nocken auf, wobei beide Nocken an die jeweils axial benachbarte Begrenzungswand der Einbaunut anlegbar sind. Durch die Nocken stirnseitig beiderseits des Gleitrings werden der Gleitring und dadurch der gesamte Dichtring selbsttätig in der Einbaunut in axialer Richtung zentriert. Dies ist insbesondere im Bereich der Durchtrennung zur Erzielung der zuvor beschriebenen guten Gebrauchseigenschaften sehr vorteilhaft. Außerdem besteht die Möglichkeit, dass stirnseitig beiderseits jeweils gleichmäßig in Umfangsrichtung verteilt angeordnete Nocken vorgesehen sind, so dass der Gleitring auch im Bereich außerhalb der Durchtrennung in der Einbaunut in axialer Richtung fixiert ist.

Das Abdichtungsergebnis der gegeneinander abzudichtenden Räume ist besonders gut, wenn die Durchtrennung, in einer Draufsicht auf den Gleitring betrachtet, im Wesentlichen Z-förmig ausgebildet ist. In einem solchen Fall ist die Durchtrennung durch jeweils einen stirnseitigen Axialschlitz gebildet, deren einander zugewandte Seiten durch einen Umfangsschlitz miteinander verbunden sind. Durch eine solche Ausgestaltung ist die Durchtrennung im Wesentlichen labyrinthförmig, wobei die den Umfangsschlitz begrenzenden Bereiche der Enden des Gleitrings einander anliegend berühren. Die Berührung wird dadurch erreicht, dass die axiale Länge des Gleitrings im Bereich der Durchtrennung einschließlich der Nocken zumindest der axialen Länge der Einbaunut entspricht. Bevorzugt ist der Gleitring in axialer Richtung vorgespannt innerhalb der Einbaunut angeordnet, so dass auch die einander axial benachbart zugeordneten Begrenzungen des Umfangsschlitzes einander unter axialer Vorspannung dichtend berühren.

Weiter bevorzugt sind die Nocken dabei im Bereich der Umfangserstreckung des Umfangsschlitzes, in Umfangsrichtung betrachtet, einander axial gegenüberliegend angeordnet. Ein Verkanten der Enden des Gleitrings, die die Durchtrennung begrenzen, kann dadurch weitgehend ausgeschlossen werden.

Die Nocken können mit dem Gleitring jeweils einstückig ineinander übergehend und materialeinheitlich ausgebildet sein. Die Herstellung eines solchen Gleitrings ist dadurch einfach und kostengünstig. Die Nocken können übereinstimmend ausgebildet sein. Sie weisen dadurch übereinstimmende Gebrauchseigenschaften auf, beispielsweise eine übereinstimmende Anpresskraft, auf den Umfangsschlitz des in axialer Richtung in der Einbaunut zentrierten Gleitrings.

Die Nocken können, in radialer Richtung betrachtet, in axialer Richtung konvex vorgewölbt sein. Außerdem oder alternativ besteht die Möglichkeit, dass die Nocken, in Umfangsrichtung betrachtet, in axialer Richtung konvex vorgewölbt sind. Sind die Nocken beispielsweise im Wesentlichen halbkugelförmig ausgebildet, ist die Montage des Dichtrings in die Einbaunut sehr einfach, da sich solche Nocken mit geringem Kraftaufwand einfach elastisch verformen lassen.

Der Gleitring besteht bevorzugt aus einem polymeren Werkstoff, beispielsweise Polyamid.

Der Anpressring besteht bevorzugt aus einem elastomeren Werkstoff, beispielsweise HNBR (Hydrogenated Nitrile Butadiene Rubber).

Außerdem betrifft die Erfindung eine Dichtungsanordnung zur Abdichtung von zwei relativ zueinander beweglichen Maschinenelementen.

Solche Dichtungsanordnungen, die beispielsweise relativ translatorisch zueinander bewegbare Maschinenelemente abdichten, sind allgemein bekannt, wobei eines der Maschinenelemente ein radial in Richtung des anderen Maschinenelements offene Einbaunut für einen Dichtring aufweist. Die Dichtringe können beispielsweise zweiteilig ausgebildet sein und einen Gleitring und einen Anpressring zur Anpressung des Gleitrings an die Oberfläche des abzudichtenden Maschinenelements aufweisen. Der Dichtring kann als radial außen dichtende Kolbendichtung oder als radial innen dichtende Stangendichtung ausgebildet sein.

Die Montage/Demontage solcher Dichtungsanordnungen mit in sich geschlossenem Gleitring ist häufig nachteilig.

Der Erfindung liegt die Aufgabe zu Grunde, eine Dichtungsanordnung der vorbekannten Art derart weiter zu entwickeln, dass diese einfach montiert/demontiert werden kann, gute Gebrauchseigenschaften während einer langen Gebrauchsdauer aufweist, insbesondere eine gute Abdichtung der gegeneinander abzudichtenden Räume.

Diese Aufgabe wird durch die Merkmale von Anspruch 13 gelöst. Auf vorteilhafte Ausgestaltungen nehmen die auf Anspruch 13 rückbezogenen Ansprüche Bezug.

Zur Lösung der Aufgabe ist eine Dichtungsanordnung zur Abdichtung von zwei relativ zueinander beweglichen Maschinenelementen vorgesehen, wobei eines der Maschinenelemente eine radial in Richtung des anderen Maschinenelements offene Einbaunut für einen Dichtring gemäß einem der Ansprüche 1 bis 12 aufweist, wobei zumindest einer der Nocken an die jeweils axial benachbarte Begrenzungswand der Einbaunut angelegt ist. Bevorzugt sind bei der Dichtungsanordnung beide Nocken an die jeweils axial benachbarte Begrenzungswand der Einbaunut angelegt.

Die Nocken berühren die jeweils axial benachbarte Begrenzungswand bevorzugt unter elastischer Vorspannung anliegend. Der Anpressring kann bei einer Kolbendichtung zwischen Nutgrund der Einbaunut und Innenumfangsfläche des Gleitrings unter elastischer Vorspannung dichtend angeordnet sein. Bei der zuvor beschriebenen Dichtungsanordnung ist von Vorteil, dass eine einfache Montage/Demontage des Gleitrings auch dann gewährleistet ist, wenn die Einbaunut nur schwer zugänglich ist und/oder wenn zur Montage/Demontage eines in sich geschlossenen Gleitrings ein hoher Aufwand nötig wäre, weil beispielsweise eine Maschine, in der der Dichtring zur Anwendung gelangt, weitgehend zerlegt werden müsste.

Die Relativbewegung der die Durchtrennung begrenzenden Enden des Gleitrings wird durch die sich in axialer Richtung erstreckenden Nocken auf ein Minimum begrenzt, da die Nocken während der bestimmungsgemäßen Verwendung des Dichtrings an der jeweils axial benachbarten Begrenzungswand der Einbaunut anliegen.

Trotz der einfachen Montage des durch die Durchtrennung geschlitzten Gleitrings weist dieser durch die Funktion und Anordnung der Nocken ausgezeichnete Gebrauchseigenschaften während einer langen Gebrauchsdauer auf, die sich von einem in sich geschlossenen Gleitring auch im Hinblick auf Abdichtleistung praktisch nicht unterscheiden.

Durch die Nocken stimseitig beiderseits des Gleitrings werden der Gleitring und dadurch der gesamte Dichtring selbsttätig in der Einbaunut in axialer Richtung zentriert. Dies ist insbesondere im Bereich der Durchtrennung zur Erzielung der zuvor beschriebenen guten Gebrauchseigenschaften sehr vorteilhaft. Außerdem besteht die Möglichkeit, dass stirnseitig beiderseits jeweils gleichmäßig in Umfangsrichtung verteilt angeordnete Nocken vorgesehen sind, so dass der Gleitring auch im Bereich außerhalb der Durchtrennung in der Einbaunut in axialer Richtung fixiert ist.

Außerdem betrifft die Erfindung die Verwendung eines Dichtrings nach einem der Ansprüche 1 bis 12 oder einer Dichtungsanordnung nach einem der Ansprüche 13 bis 16 in einer Schlagbohrmaschine. Insbesondere für eine solche Verwendung ist der beanspruchte Dichtring oder die beanspruchte Dichtungsanordnung von hervor zu hebendem Vorteil. Das Schlaggerät, das auf den Bohrer schlägt, muss gegenüber dem Bohrer abgedichtet werden, um zu verhindern, dass Verunreinigungen am Bohrer und am Schlaggerät vorbei ins Getriebe gelangen und dort zu einer Beschädigung/Zerstörung der Schlagbohrmaschine führen. Die Dichtung ist in einer radial nach außen offenen Nut des Schlaggeräts einer Schlagbohrmaschine angeordnet, das auf den Meisselbohrer wirkt. Auf der dem Meisselbohrer abgewandten Seite des Schlaggeräts ist der Erregerkolben angeordnet, der axial in Richtung des Meisselbohrers auf das Schlaggerät wirkt und auf der dem Meisselbohrer axial abgewandten Seite vom Antriebskolben beaufschlagt wird, dem ein Getriebe vorgeschaltet ist.

### Kurzbeschreibung der Zeichnung

Ein Ausführungsbeispiel des erfindungsgemäßen Dichtrings in einer erfindungsgemäßen Dichtungsanordnung ist in den Figuren gezeigt und wird im Folgenden näher beschrieben.

Die Figuren zeigen:
- Fig. 1:: einen Ausschnitt aus einer Dichtungsanordnung mit eingebautem Dichtring,
- Fig. 2:: den Gleitring aus Fig. 1 in perspektivischer Darstellung,
- Fig. 3:: den Gleitring aus Fig. 2 in einer Draufsicht auf die Durchtrennung,
- Fig. 4:: einen vergrößerten Ausschnitt aus dem Gleitring aus Fig. 3 im Bereich der Durchtrennung,
- Fig. 5:: den Gleitring aus Fig. 1 in einem Halbschnitt,
- Fig. 6:: einen Nocken des Gleitrings aus Fig. 5 in vergrößerter Darstellung,
- Fig. 7:: den Anpressring aus Fig. 1 in einem Halbschnitt.

### Ausführung der Erfindung

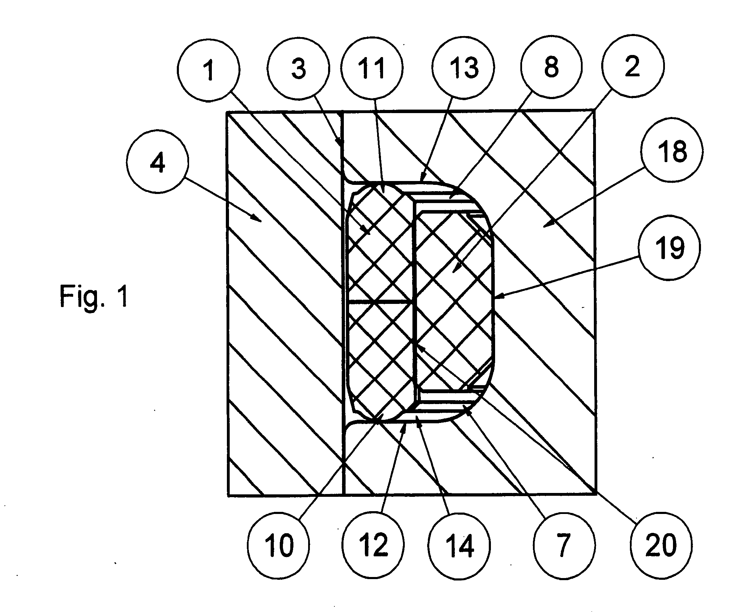

In Figur 1 ist ein Ausschnitt aus einer Dichtungsanordnung einer Schlagbohrmaschine gezeigt. Der Dichtring aus der Dichtungsanordnung umfasst einen Gleitring 1 und einen Anpressring 2 zur Anpressung des Gleitrings 1 an die Oberfläche 3 des abzudichtenden ersten Maschinenelements 4. Der Gleitring 1 besteht in dem hier gezeigten Ausführungsbeispiel aus Polyamid. Der Anpressring besteht aus einem gummielastischen Werkstoff, beispielsweise HNBR. Der Dichtring ist als radial außendichtende Kolbendichtung ausgebildet.

Die Oberfläche 3 des abzudichtenden ersten Maschinenelements 4 begrenzt in dem hier gezeigten Ausführungsbeispiel eine Bohrung eines Gehäuses. Der Anpressring 2 ist unter elastischer radialer Vorspannung innerhalb der Einbaunut 14 angeordnet und berührt radial innenseitig den Nutgrund 19 und radial außenseitig die Innenumfangsfläche 20 des Gleitrings 1 unter radialer Vorspannung. Durch die radiale Kraft, die der Anpressring 2 auf den Gleitring 1 ausübt, wird dieser sicher an die abzudichtende Oberfläche 3 des abzudichtenden ersten Maschinenelements 4 angelegt.

Der beanspruchte Dichtring ist in dem in Figur 1 gezeigten Ausführungsbeispiel als Kolbendichtung ausgebildet. Davon abweichend kann er jedoch auch als Stangendichtung ausgebildet sein. Das abzudichtende Maschinenelement wäre in diesem Fall eine Stange und der Gleitring würde die Oberfläche der abzudichtenden Stange unter elastischer Vorspannung anliegend berühren. Die Einbaunut 14 wäre dann in einem Gehäuse angeordnet und radial in Richtung der Stange offen.

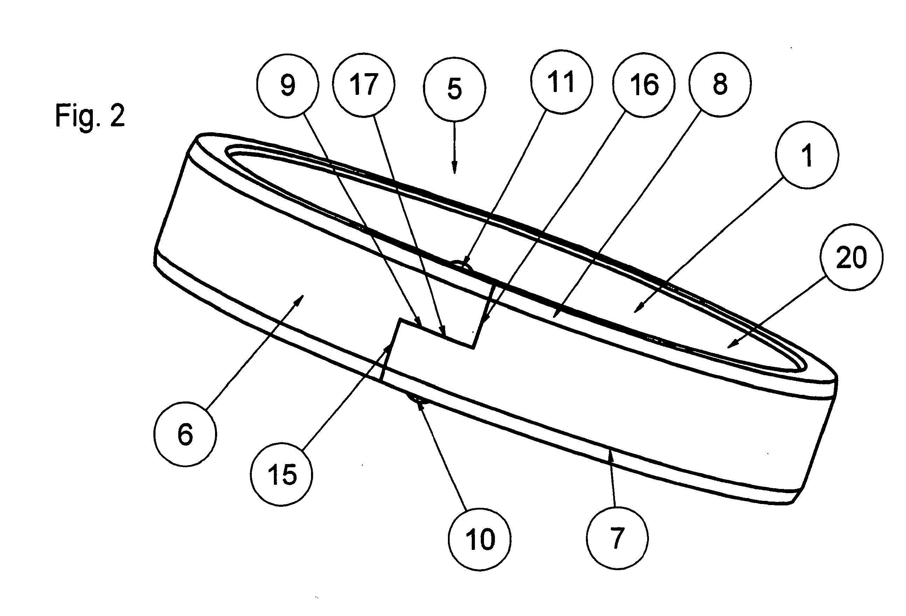

Im hier dargestellten Ausführungsbeispiel weist der Gleitring 1 an einer Stelle 5 seines Umfangs 6, die in den Figuren 2 bis 4 dargestellt ist, eine sich axial von einer 7 zur anderen Stirnseite 8 erstreckende Durchtrennung 9 auf, die die Montage des Dichtrings wesentlich vereinfacht. Trotz der Durchtrennung 9, 15, 16, 17 und deren axialer Verpressung, wird der Gleitring 1 durch den Anpressring 2 radial an die abzudichtende Oberfläche 3 dichtend angepresst. Der Gleitring 1 ist in dem hier gezeigten Ausführungsbeispiel stirnseitig beiderseits im Bereich der Durchtrennung 9 mit jeweils zumindest einem sich in axialer Richtung erstreckenden Nocken 10, 11 versehen, wobei beide Nocken 10, 11 an die jeweils axial benachbarte Begrenzungswand 12, 13 der Einbaunut 14 unter elastischer Vorspannung angelegt sind. Die Nocken 10, 11 sind jeweils einstückig ineinander übergehend und materialeinheitlich mit dem Gleitring 1 ausgebildet.

In Figur 2 ist der Gleitring 1 aus Figur 1 in einer perspektivischen Ansicht gezeigt.

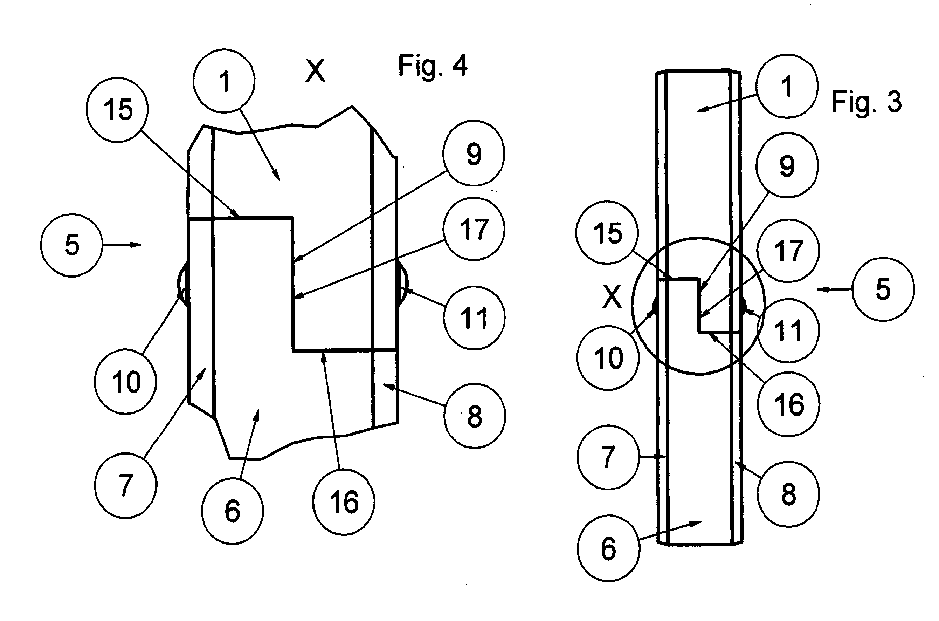

In Figur 3 ist der Gleitring aus Figur 2 in einer Draufsicht im Bereich der Durchtrennung 9 dargestellt.

In Figur 4 ist die Durchtrennung aus den Figuren 2 und 3 vergrößert gezeigt.

Der Gleitring 1 weist an einer Stelle 5 seines Umfangs 6 eine sich axial von einer 7 zur anderen Stirnseite 8 erstreckende Durchtrennung 9 auf, wobei die Durchtrennung 9, wie in der Draufsicht Figuren 3 und 4 gezeigt, im Wesentlichen Z-förmig ausgebildet ist. Die Durchtrennung 9 hat dadurch jeweils einen stimseitigen Axialschlitz 15, 16, wobei die einander zugewandten Seiten der Axialschlitze 15, 16 durch den Umfangsschlitz 17 mit einander verbunden sind.

Außerdem weist der Gleitring 1 im hier gezeigten Beispiel stirnseitig beiderseits dem Bereich der Durchtrennung 9 jeweils zumindest einen sich in axialer Richtung erstreckenden Nocken 10, 11 auf, die an die jeweils axial benachbarte Begrenzungswand 12, 13 der Einbaunut 14 (vergleiche Figur 1) anlegbar sind.

Die Nocken 10, 11 sind im Bereich der Umfangserstreckung des Umfangsschlitzes 17 angeordnet und, in Umfangsrichtung betrachtet, einander axial gegenüberliegend angeordnet und übereinstimmend ausgebildet. Die Nocken 10, 11 sind, in radialer Richtung betrachtet, in axialer Richtung konvex vorgewölbt und, in Umfangsrichtung betrachtet, in axialer Richtung konvex vorgewölbt. Dadurch, dass die Nocken 10, 11 jeweils unter axialer Vorspannung an den jeweils axial benachbarten Begrenzungswandungen 12, 13 der Einbaunut 14 anliegen, ist auch der Umfangsschlitz 17 während der bestimmungsgemäßen Verwendung des Dichtrings dicht, da die den Umfangsschlitz 17 begrenzenden Wandungen unter axialer Vorspannung dichtend aneinander angelegt sind.

Generell besteht die Möglichkeit, an jeder Stirnseite 7, 8 des Gleitrings 1 mehrere, bevorzugt zumindest drei gleichmäßig in Umfangsrichtung verteilt angeordnete Nocken vorzusehen, um die Gefahr von Verkantungen des Dichtrings in der Einbaunut 14 zu minimieren und eine besonders exakte Positionierung zu erreichen.

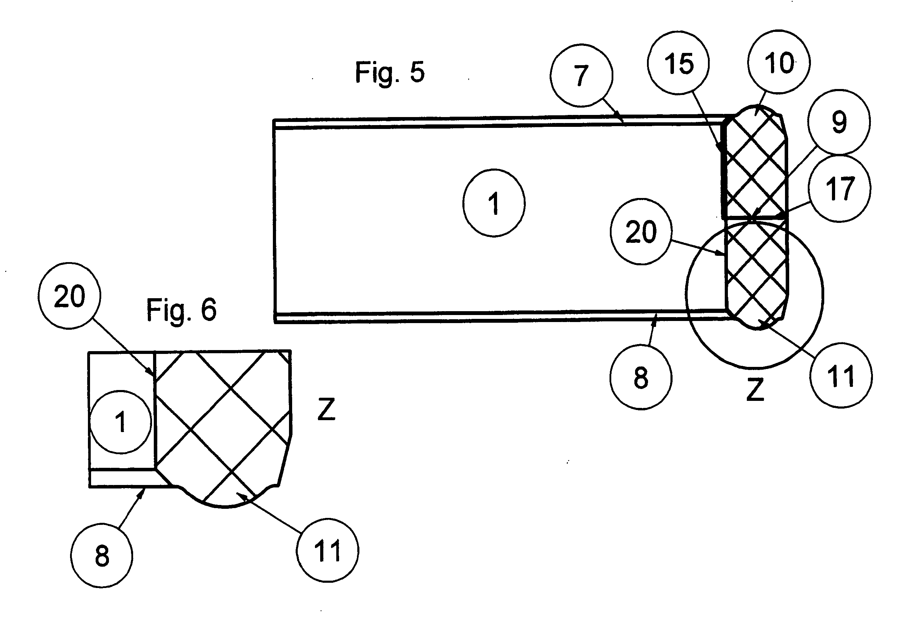

In Figur 5 ist der Gleitring 1 aus Figur 1 in einem Halbschnitt dargestellt. Der Umfangsschlitz 17 und die Nocken 10, 11 im Bereich der Stirnseiten 7, 8 sind jeweils gut zu erkennen.

In Figur 6 ist eine der Stirnseiten 7, 8 mit dem jeweiligen Nocken 10, 11 vergrößert dargestellt. Der Nocken 10, 11 ist, in radialer Richtung betrachtet, in axialer Richtung konvex vorgewölbt.

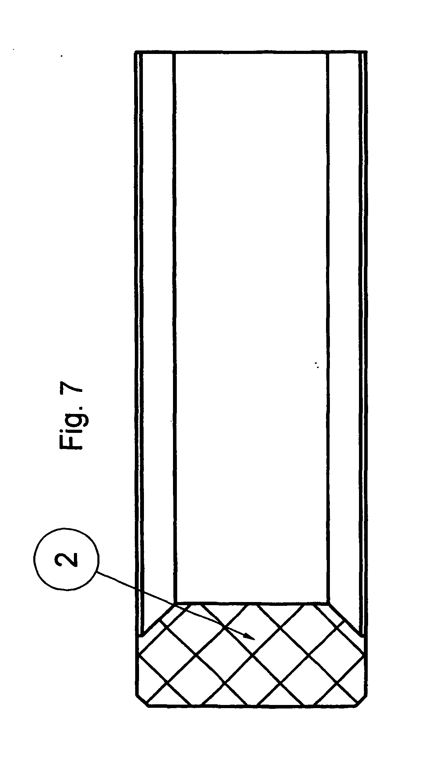

In Figur 7 ist ein Ausführungsbeispiel eines Anpressrings 2 gezeigt, der aus elastomerem Werkstoff besteht und zur Anpressung des Gleitrings 1 an die Oberfläche 3 des abzudichtenden Maschinenelements 4 vorgesehen ist.

### Bezugszeichenliste

- 1: Gleitring
- 2: Anpressring
- 3: Oberfläche von 4
- 4: Abzudichtendes erstes Maschinenelement
- 5: Stelle der Durchtrennung 9 am Umfang 6
- 6: Umfang
- 7: Linke Stirnseite von 1
- 8: Rechte Stirnseite von 1
- 9: Durchtrennung
- 10: Linker Nocken
- 11: Rechter Nocken
- 12: Begrenzungswand links
- 13: Begrenzungswand rechts
- 14: Einbaunut
- 15: Axialschlitz links
- 16: Axialschlitz rechts
- 17: Umfangsschlitz
- 18: Zweites Maschinenelement
- 19: Nutgrund von 14
- 20: Innenumfangsfläche von 1

## Patentansprüche

1. Dichtring, umfassend einen Gleitring (1) und einen Anpressring (2) zur Anpressung des Gleitrings (1) an die Oberfläche (3) eines abzudichtenden Maschinenelements (4), wobei der Gleitring (1) stirnseitig zumindest einerseits zumindest einen sich in axialer Richtung erstreckenden Nocken (10, 11) aufweist, der an einer axial benachbarten Begrenzungswand (12, 13) einer Einbaunut (14) anlegbar ist, **dadurch gekennzeichnet, dass** der Gleitring (1) an einer Stelle (5) seines Umfangs (6) eine sich axial von einer (7) zur anderen Stirnseite (8) erstreckende Durchtrennung (9) aufweist und dass der Nocken (10, 11) im Bereich der Umfangserstreckung der Durchtrennung (9) angeordnet ist.

2. Dichtring nach Anspruch 1, **dadurch gekennzeichnet, dass** der Gleitring (1) stirnseitig beiderseits, im Bereich (der Umfangserstreckung) der Durchtrennung (9) jeweils zumindest einen sich in axialer Richtung erstreckenden Nocken (10, 11) aufweist und dass beide Nocken (10, 11) an die jeweils axial benachbarte Begrenzungswand (12, 13) der Einbaunut (14) anlegbar sind.

3. Dichtring nach einem der Ansprüche 1 oder 2, **dadurch gekennzeichnet, dass** die Durchtrennung (9), in einer Draufsicht auf den Gleitring (1) betrachtet, im Wesentlichen Z-förmig ausgebildet ist.

4. Dichtring nach einem der Ansprüche 1 bis 3, **dadurch gekennzeichnet, dass** die Durchtrennung (9) durch jeweils einen stirnseitigen Axialschlitz (15, 16) gebildet ist, deren einander zugewandte Seiten durch einen Umfangsschlitz (17) miteinander verbunden sind.

5. Dichtring nach einem der Ansprüche 1 bis 4, **dadurch gekennzeichnet, dass** die Nocken (10, 11) im Bereich der Umfangserstreckung des Umfangsschlitzes (17) angeordnet sind.

6. Dichtring nach einem der Ansprüche 1 bis 5, **dadurch gekennzeichnet, dass** die Nocken (10, 11), in Umfangsrichtung betrachtet, einander axial gegenüber liegend angeordnet sind.

7. Dichtring nach einem der Ansprüche 1 bis 6, **dadurch gekennzeichnet, dass** die Nocken (10, 11) mit dem Gleitring (1) jeweils einstückig ineinander übergehend und materialeinheitlich ausgebildet sind.

8. Dichtring nach einem der Ansprüche 1 bis 7, **dadurch gekennzeichnet, dass** die Nocken (10, 11) übereinstimmend ausgebildet sind.

9. Dichtring nach einem der Ansprüche 1 bis 8, **dadurch gekennzeichnet, dass** die Nocken (10,11), in radialer Richtung betrachtet, in axialer Richtung konvex vorgewölbt sind.

10. Dichtring nach einem der Ansprüche 1 bis 9, **dadurch gekennzeichnet, dass** die Nocken (10,11), in Umfangsrichtung betrachtet, in axialer Richtung konvex vorgewölbt sind.

11. Dichtring nach einem der Ansprüche 1 bis 10, **dadurch gekennzeichnet, dass** der Gleitring (1) aus einem polymeren Werkstoff besteht.

12. Dichtring nach einem der Ansprüche 1 bis 11, **dadurch gekennzeichnet, dass** der Anpressring (2) aus einem elastomeren Werkstoff besteht.

13. Dichtungsanordnung zur Abdichtung von zwei relativ zueinander beweglichen Maschinenelementen (4, 18), wobei eines der Maschinenelemente (18) eine radial in Richtung des anderen Maschinenelements (4) offene Einbaunut (14) mit einem Dichtring gemäß einem der Ansprüche 1 bis 12 aufweist, wobei zumindest einer der Nocken (10, 11) an die jeweils axial benachbarte Begrenzungswand (12, 13) der Einbaunut (14) angelegt ist.

14. Dichtungsanordnung nach Anspruch 13, **dadurch gekennzeichnet, dass** beide Nocken (10, 11) an die jeweils axial benachbarte Begrenzungswand (12, 13) der Einbaunut (14) angelegt sind.

15. Dichtungsanordnung nach einem der Ansprüche 13 oder 14, **dadurch gekennzeichnet, dass** die Nocken (10, 11) die jeweils axial benachbarte Begrenzungswand (12, 13) unter elastischer Vorspannung anliegend berührt.

16. Dichtungsanordnung nach einem der Ansprüche 13 bis 15, **dadurch gekennzeichnet, dass** der Anpressring (2) zwischen Nutgrund (19) der Einbaunut (14) und Innenumfangsfläche (20) des Gleitrings (1) unter elastischer Vorspannung dichtend angeordnet ist.

17. Verwendung eines Dichtrings nach einem der Ansprüche 1 bis 12 oder einer Dichtungsanordnung nach einem der Ansprüche 13 bis 16 in einer Schlagbohrmaschine.

## Claims

1. Sealing ring comprising a sliding ring (1) and a press-on ring (2) for pressing the sliding ring (1) onto the surface (3) of a machine element (4) to be sealed, wherein the sliding ring (1) has, at least on one end side, at least one cam (10, 11) which extends in the axial direction and can be placed against an axially adjacent boundary wall (12, 13) of an installation groove (14), **characterized in that** the sliding ring (1), at a location (5) on the circumference (6) thereof, has a perforation (9) extending axially from one end side (7) to the other end side (8), and **in that** the cam (10, 11)'is arranged in the region of the circumferential extent of the perforation (9).

2. Sealing ring according to Claim 1, **characterized in that** the sliding ring (1) has, in each case on both end sides in the region of the circumferential extent of the perforation (9), at least one cam (10, 11) extending in the axial direction, and **in that** the two cams (10, 11) can be placed onto the respectively axially adjacent boundary wall (12, 13) of the installation groove (14).

3. Sealing ring according to either of Claims 1 and 2, **characterized in that** the perforation (9) is of substantially Z-shaped design, as viewed in a top view of the sliding ring (1).

4. Sealing ring according to one of Claims 1 to 3, **characterized in that** the perforation (9) is formed by an axial slit (15, 16) on each end side, the mutually facing sides of which axial slit are connected to each other by a circumferential slit (17).

5. Sealing ring according to one of Claims 1 to 4, **characterized in that** the cams (10, 11) are arranged in the region of the circumferential extent of the circumferential slit (17).

6. Sealing ring according to one of Claims 1 to 5, **characterized in that** the cams (10, 11) are arranged facing each other axially, as viewed in the circumferential direction.

7. Sealing ring according to one of Claims 1 to 6, **characterized in that** the cams (10, 11) are formed together with the sealing ring (1) such that they merge in each case into each other as a single piece and are of the same material.

8. Sealing ring according to one of Claims 1 to 7, **characterized in that** the cams (10, 11) are of corresponding design.

9. Sealing ring according to one of Claims 1 to 8, **characterized in that** the cams (10, 11) are made to protrude convexly in the axial direction, as viewed in the radial direction.

10. Sealing ring according to one of Claims 1 to 9, **characterized in that** the cams (10, 11) are made to protrude convexly in the axial direction, as viewed in the circumferential direction.

11. Sealing ring according to one of Claims 1 to 10, **characterized in that** the sliding ring (1) is composed of a polymer material.

12. Sealing ring according to one of Claims 1 to 11, **characterized in that** the press-on ring (2) is composed of an elastomer material.

13. Sealing arrangement for sealing two machine elements (4, 18) which are movable relative to each other, wherein one of the machine elements (18) has an installation groove (14) which is open radially in the direction of the other machine element (4) and has a sealing ring according to one of Claims 1 to 12, wherein at least one of the cams (10, 11) is placed onto the respectively axially adjacent boundary wall (12, 13) of the installation groove (14).

14. Sealing arrangement according to Claim 13, **characterized in that** the two cams (10, 11) are placed onto the respectively axially adjacent boundary wall (12, 13) of the installation groove (14).

15. Sealing arrangement according to either of Claims 13 and 14, **characterized in that** the cams (10, 11) are in bearing contact with the respectively axially adjacent boundary wall (12, 13) under elastic prestress.

16. Sealing arrangement according to one of Claims 13 to 15, **characterized in that** the press-on ring (2) is arranged in a sealing manner under elastic prestress between the groove base (19) of the installation groove (14) and the inner circumferential surface (20) of the sliding ring (1).

17. Use of a sealing ring according to one of Claims 1 to 12 or of a sealing arrangement according to one of Claims 13 to 16 in a percussion drill.

## Revendications

1. Bague d'étanchéité comprenant une bague de glissement (1) et une bague de pressage (2) pour presser la bague de glissement (1) contre la surface (3) d'un élément de machine (4) à étancher, la bague de glissement (1) présentant du côté frontal au moins d'une part au moins une came (10, 11) s'étendant dans la direction axiale, qui peut être appliquée contre une paroi de limitation axialement adjacente (12, 13) d'une rainure de montage (14), **caractérisée en ce que** la bague de glissement (1) présente en un endroit (5) de sa périphérie (6) une séparation (9) s'étendant axialement d'un côté frontal (7) à l'autre (8), et **en ce que** la came (10, 11) est disposée dans la région de l'étendue périphérique de la séparation (9).

2. Bague d'étanchéité selon la revendication 1, **caractérisée en ce que** la bague de glissement (1) présente du côté frontal des deux côtés dans la région de l'étendue périphérique de la séparation (9) à chaque fois au moins une came (10, 11) s'étendant dans la direction axiale et **en ce que** les deux cames (10, 11) peuvent être appliquées contre la paroi de limitation axialement adjacente respective (12, 13) de la rainure de montage (14).

3. Bague d'étanchéité selon l'une quelconque des revendications 1 ou 2, **caractérisée en ce que** la séparation (9), considérée en vue de dessus sur la bague de glissement (1), est réalisée avec une forme essentiellement en Z.

4. Bague d'étanchéité selon l'une quelconque des revendications 1 à 3, **caractérisée en ce que** la séparation (9) est formée à chaque fois par une fente axiale du côté frontal (15, 16), dont les côtés tournés l'un vers l'autre sont connectés l'un à l'autre par une fente périphérique (17).

5. Bague d'étanchéité selon l'une quelconque des revendications 1 à 4, **caractérisée en ce que** les cames (10, 11) sont disposées dans la région de l'étendue périphérique de la fente périphérique (17).

6. Bague d'étanchéité selon l'une quelconque des revendications 1 à 5, **caractérisée en ce que** les cames (10, 11) sont disposées, considérées dans la direction périphérique, axialement en regard l'une de l'autre.

7. Bague d'étanchéité selon l'une quelconque des revendications 1 à 6, **caractérisée en ce que** les cames (10, 11) sont réalisées avec la bague de glissement (1) à chaque fois en se prolongeant l'une dans l'autre d'une seule pièce et en le même matériau.

8. Bague d'étanchéité selon l'une quelconque des revendications 1 à 7, **caractérisée en ce que** les cames (10, 11) sont réalisées de manière à coïncider l'une avec l'autre.

9. Bague d'étanchéité selon l'une quelconque des revendications 1 à 8, **caractérisée en ce que** les cames (10, 11), considérées dans la direction radiale, sont précintrées de manière convexe dans la direction axiale.

10. Bague d'étanchéité selon l'une quelconque des revendications 1 à 9, **caractérisée en ce que** les cames (10, 11), considérées dans la direction périphérique, sont précintrées de manière convexe dans la direction axiale.

11. Bague d'étanchéité selon l'une quelconque des revendications 1 à 10, **caractérisée en ce que** la bague de glissement (1) se compose d'un matériau polymère.

12. Bague d'étanchéité selon l'une quelconque des revendications 1 à 11, **caractérisée en ce que** la bague de pressage (2) se compose d'un matériau élastomère.

13. Agencement d'étanchéité pour étancher deux éléments de machine (4, 18) déplaçables l'un par rapport à l'autre, l'un des éléments de machine (18) présentant une rainure de montage (14) ouverte radialement dans la direction de l'autre élément de machine (4), avec une bague d'étanchéité selon l'une quelconque des revendications 1 à 12, au moins l'une des cames (10, 11) étant appliquée contre la paroi de limitation (12, 13) respectivement adjacente axialement de la rainure de montage (14).

14. Agencement d'étanchéité selon la revendication 13, **caractérisé en ce que** les deux cames (10, 11) sont appliquées contre la paroi de limitation respective axialement adjacente (12, 13) de la rainure de montage (14).

15. Agencement d'étanchéité selon l'une quelconque des revendications 13 ou 14, **caractérisé en ce que** les cames (10, 11) viennent en contact avec la paroi de limitation respective axialement adjacente (12, 13) par précontrainte élastique.

16. Agencement d'étanchéité selon l'une quelconque des revendications 13 à 15, **caractérisé en ce que** la bague de pressage (2) est disposée de manière hermétique entre le fond de rainure (19) de la rainure de montage (14) et la surface périphérique interne (20) de la bague de glissement (1), avec une précontrainte élastique.

17. Utilisation d'une bague d'étanchéité selon l'une quelconque des revendications 1 à 12 ou d'un agencement d'étanchéité selon l'une quelconque des revendications 13 à 16 dans une machine de forage par percussion.
